(19) Europäisches Patentamt
European Patent Office
Office européen des brevets

(11) **EP 1 773 018 A1**

(12) **EUROPEAN PATENT APPLICATION**

(43) Date of publication:
**11.04.2007 Bulletin 2007/15**

(51) Int Cl.:
**H04L 29/06** (2006.01)   **G06F 1/00** (2006.01)

(21) Application number: **05405716.1**

(22) Date of filing: **21.12.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (71) Applicant: **Privasphere AG**<br>**8032 Zürich (CH)** |
| | (72) Inventor: **Hauser, Ralf**<br>**8702 Zollikon (CH)** |
| (30) Priority: **05.10.2005 EP 05405571**<br>**08.12.2005 EP 05405693**<br>**05.10.2005 US 723469** | (74) Representative: **Vogel, Dany et al**<br>**Isler & Pedrazzini AG**<br>**Postfach 6940**<br>**8023 Zürich (CH)** |

(54) **Method and devices for user authentication**

(57)      An authentication token device (20), comprises a device interface (21) for connecting the device (20) with a communication terminal; a first memory module (201) having stored therein an asymmetric key pair, including a private key and a public key; a second memory module (202) having stored therein a secret token key; a certification module (25) for receiving though the device interface (21) a data set from the communication terminal, for generating a digital signature from the data set using the private key, and for transferring the digital signature through the device interface (21) to the communication terminal; and an authentication number generator (26) for generating an authentication base number from the data set, using the secret token key for encrypting the data set. From the authentication base number and a user's personal identification code, a transaction authentication number can be generated that protects online users against real-time man-in-the-middle attacks.

**Fig. 3**

## Description

Field of the Invention

The present invention relates to a method and to devices for authenticating a user accessing a server. Specifically, the present invention relates to a method, an authentication token device, and a computerized server for authenticating a user using a communication terminal to access the server via a telecommunications network.

Background of the Invention

The sophistication of attacks against login mechanisms over the Internet is rapidly growing. Institutions such as banks are rolling out two-factor authentication devices, some even including challenge-response mechanisms, at a high pace and even higher cost. Man-in-the-middle (MITM) attacks pose a serious threat to all SSL/TLS-based online applications, such as Internet banking. The common answer to this is to use the client-certificate based mutual authentication as required by the original Secure Sockets Layer (SSL) protocol (US 5,657,390) or Transport Layer Security (TLS) protocol standards (Dierks, T., and C. Allen, "The TLS Protocol Version 1.0," Request for Comments 2246, January 1999). However, beyond tightly controlled areas of corporate influence, this approach has not found the widespread acceptance its designers anticipated,

US 4,405,829, US 4,720,860, US 4,885,778, and US 4,856,062 relate to an authentication token device that is commonly known as SecureID token. This token device provides strong user authentication, however, it does not protect against man-in-the-middle attacks that operate in real-time.

Described in the patent application US 2004/0064687 is a method for preventing man-in-the-middle attacks by means of an online third-party, i.e. an "Identity Provider". The method described does not require changes to the SSL/TLS protocols nor does it require a full public key infrastructure (PKI) to be rolled out. However, it requires the client to be changed and to contain a hard-coded certificate of the identity provider.

Summary of the Invention

It is an object of this invention to provide a method and devices for authenticating a user using a communication terminal to access the server via a telecommunications network. In particular, it is an object of the present invention to provide a method and devices for user authentication that protect against man-in-the-middle attacks that operate in real-time. It is a further object of the present invention to provide a method and devices for authenticating users accessing a server via a telecommunications network using a secure session established with a secure session establishment protocol.

According to the present invention, these objects are achieved particularly through the features of the independent claims. In addition, further advantageous embodiments follow from the dependent claims and the description.

According to the present invention, the above-mentioned objects are particularly achieved in that, for authenticating a user using a communication terminal to access a server via a telecommunications network, a personal identification code is received from the user; in an authentication module associated with the communication terminal, an authentication base number is generated from the data set, using a secret token key associated with the authentication module; a transaction authentication number is generated from the authentication base number, using the personal identification code; the transaction authentication number is transmitted from the communication terminal to the server; in the server, an authentication base number is generated from the secure session establishment protocol messages exchanged, using the secret token key; and, in the server, the transaction authentication number is verified using the authentication base number generated in the server.

In an embodiment, for authenticating a user using a communication terminal to access a server via a telecommunications network, a personal identification code is received from the user, in an authentication module associated with the communication terminal, a digital signature is generated from a data set, using a private key of a key pair associated with the authentication module; in the authentication module, an authentication base number is generated from the data set, using a secret token key associated with the authentication module; a transaction authentication number is generated from the authentication base number, the personal identification code is used in generating the digital signature or in generating the transaction authentication number; the data set and the digital signature are transmitted from the communication terminal to the server; in the server, the digital signature is verified using a public key of the key pair, the transaction authentication number is transmitted from the communication terminal to the server; in the server, an authentication base number is generated from the data set received from the communication terminal, using the secret token key for encrypting the data set; and, in the server, the transaction authentication number is verified using the authentication base number generated in the server. For example, the data set is generated in the communication terminal as a hash value from secure session establishment protocol messages exchanged between the communication terminal and the server. It must be emphasized, that the transaction authentication number described herein is used as a session authentication number in the context of this invention.

In a preferred embodiment, the transaction authentication number is generated from the authentication base number and the personal identification code. The transaction authentication number and a user identifier are transmitted from the communication terminal to the server. The transaction authentication number is verified in the server using the authentication base number generated in the server and a personal identification code assigned to the user identifier.

Preferably, the authentication module is implemented as an authentication token device removably connectable to the communication terminal. The data set is transferred from the communication terminal to the authentication module through a device interface, connecting the authentication module to the communication terminal. The key pair and the secret token key are stored in the authentication module. The digital signature is transferred from the authentication module to the communication terminal through the device interface.

In a further preferred embodiment, a token identifier is transmitted from the communication terminal to the server together with the transaction authentication number and the secret token key is determined in the server based on the token identifier. Preferably, a master key is stored in the server and the secret token key is generated in the server from the token identifier using the master key for encrypting the token identifier.

In an embodiment, the authentication base number is transferred from the authentication module to the communication terminal. The personal identification code is received in the communication terminal from the user, and the transaction authentication number is generated in the communication terminal from the authentication base number and the personal identification code.

In another preferred embodiment, the personal identification code is received in the authentication module from the user. The transaction authentication number is generated in the authentication module from the authentication base number and the personal identification code, and the transaction authentication number is transferred from the authentication module to the communication terminal.

In a further embodiment, the personal identification code is received together with a biometric identifier from the user. The transaction authentication number is verified in the server using the authentication base number generated in the server and a biometric identifier stored in the server as well as a personal identification code assigned to the user identifier.

In another embodiment, the authentication base number is displayed by the authentication module. The transaction authentication number is generated by the user, from the personal identification code and the authentication base number displayed by the authentication module, and entered by the user into the communication terminal.

In yet another embodiment, after successful verification of the transaction authentication number in the server, a server authentication code is generated in the server from the data set, applying a public function to the data set and using the secret token key for encryption. The server authentication code is transmitted from the server to the communication terminal. The server authentication code received from the server is displayed by the communication terminal. A server authentication code is generated in the authentication module from the data set, applying the public function to the data set and using the secret token key for encryption. The server authentication code generated in the authentication module is displayed by the authentication module for visual verification with the server authentication code displayed by the communication terminal.

In an additional embodiment, the user selects one of multiple possible institution scopes for the authentication module. The institution scope selected by the user makes the authentication module use one institution-specific secret token key of a set of multiple secret token keys for generating the authentication base number. The server is associated with a specific institution and uses the institution-specific secret token key for generating the authentication base number. The server uses an institution-specific personal identification code for verifying the transaction authentication number.

The proposed method of generating transaction authentication numbers provides an efficient mechanism to protect online users against MITM attacks.

The proposed user authentication method does not require clocks that would have to be synchronized in one way or another. Instead, it employs nonces derived from the hash values used by the secure session establishment protocol (e.g. SSL/TLS) to ensure currency of the transaction authentication number.

Moreover, the security of the proposed method is not particularly undermined if the user identifier, and, for the period of time a user uses a particular transferable token, also the token identifier are stored on the communication terminal, for example by a form-pre-fill-feature of the browser. Especially, if the communication terminal is a shared workstation, this may lead to other parties and possibly adversaries learning these two values, but the proposed method is resistant to this.

The almost ubiquitous base of client-side SSL/TLS implementations does not have to be altered. Nor do client applications, such as a web browser using the SSL/TLS stack, have to be altered.

Operating the authenticated secure session bootstrapping is no more complex for security illiterate end-users than today's widely deployed two-factor solutions.

No end-user registration or other expensive processes are needed to implement the MITM-proof approach.

An institution running a two-factor solution has to replace only the device an end-user is using (but the PiNs or passwords they use remain unaltered) and adapt its own server infrastructure to work with the proposed method.

According to another object of the invention, for a user, using a communication terminal to access a server via a telecommunications network, to change a personal identification code, received from the user are an old personal identification code and a new personal identification code; a data set is generated from secure session establishment protocol messages exchanged between the communication terminal and the server, in an authentication module associated with the communication terminal an authentication base number is generated from the data set, using a secret token key associated with the authentication module; an identification change code is generated from the authentication base number, the old personal identification code, and the new personal identification code; the identification change code is transmitted from the communication terminal to the server; in the server an authentication base number is generated from the secure session establishment protocol messages exchanged, using the secret token key; and, in the server, the new personal identification code is derived from the identification change code, using the old personal identification code and the authentication base number generated in the server.

According to a further object of the invention, for authenticating a user using a communication terminal to access a server via a telecommunications network, a personal identification code is received from the user in an authentication module associated with the communication terminal, a cryptographic hash is generated from the personal identification code and from secure session establishment protocol messages exchanged between the communication terminal and the server, using as a hash key a secret shared with the server; the cryptographic hash is transmitted from the communication terminal to the server; in the server, the cryptographic hash is generated using a personal identification code stored in the server; in the server, authenticity of the user is verified based on a comparison of the cryptographic hash received from the communication terminal and the cryptographic hash generated in the server. For example, the personal identification code or a secret token key, associated with the authentication module, is used as the hash key. In an alternative embodiment, a lookup index is received from the server or generated from the data set, and in a code table determined is a selected code using the lookup index. The selected code is used as the hash key and the server generates the cryptographic hash using as the hash key a selected code from a code table stored in the server. In a sub-embodiment, the server keeps track of previously selected codes used by the communication terminal, and the server re-initiates session establishment with the communication terminal for cases where the server determines that a selected code was previously used by the communication terminal.

According to yet another object of the invention, for authenticating a user using a communication terminal to access a server via a telecommunications network, a data set is generated from secure session establishment protocol messages exchanged between the communication terminal and the server, in an authentication module associated with the communication terminal an authentication base number is generated from the data set; entered into a challenge/response token device, not connected to the communication terminal, are the authentication base number and a personal identification code;in the challenge/response token device, a token response value is generated based on the authentication base number and the personal identification code; the token response value is entered into the communication terminal; the token response value is transmitted from the communication terminal to the server; in the server, an authentication base number is generated from the secure session establishment protocol messages exchanged; and in the server, the token response value is verified using the authentication base number generated in the server.

According to an additional object of the invention, for authenticating a user using a communication terminal to access a server via a telecommunications network, a data set is generated from secure session establishment protocol messages exchanged between the communication terminal and the server, in the communication terminal an authentication base number is generated from the data set; entered into a challenge/response token device, not connected to the communication terminal, are the authentication base number and a personal identification code; in the challenge/response token device a token response value is generated based on the authentication base number and the personal identification code; the token response value is entered into the communication terminal; the token response value is transmitted from the communication terminal to the server, in the server, an authentication base number is generated from the secure session establishment protocol messages exchanged; and, in the server, the token response value is verified using the authentication base number generated in the server.

According to an additional object of the invention, for authenticating a user using a communication terminal to access a server via a telecommunications network, a data set is generated from secure session establishment protocol messages exchanged between the communication terminal and the server, a personal identification code is received from the user; in the authentication module a cryptogram is generated by encrypting the data set, the personal identification code, and a nonce, using a public key; the cryptogram is transmitted from the communication terminal to the server; in the server determined are the data set and the personal identification code by decrypting the cryptogram, using a private key; in the server verified is authenticity of the user based on a comparison of the data set with a data set generated in the server from the secure session establishment protocol messages, and on a comparison of the personal identification code with a personal identification code stored in the server.

In an embodiment, a lookup index is generated from the data set, and in a code table determined is a selected code using the lookup index. The selected code is additionally used in generating the cryptogram. The server determines the selected code from the cryptogram, using the private key. Authenticity of the user is verified by also comparing the selected code with a selected code determined by the server from a code table stored in the server, In a sub-embodiment, the server keeps track of selected codes used by the communication terminal, and the server re-initiates session establishment with the communication terminal for cases where the server determines that a selected code was previously used by the communication terminaLAccording to an additional object of the invention, for authenticating a user using a communication terminal to access a server via a telecommunications network, a data set is generated from secure session establishment protocol messages exchanged between the communication terminal and the server; in the communication terminal an authentication cryptogram is generated from the data set; the personal identification code, and one or two nonces. A pre-defined public key is used for encryption. This key either belongs to the server or an authentication server in the multi-institution case. The resulting cryptogram is transmitted from the communication terminal to the server opaquely inside a regular protocol message; in the server, a data set is generated from the secure session establishment protocol messages exchanged; and, in the server, the cryptogram is decrypted using the corresponding private key. The personal identification code retrieved from the server database and decrypted out of the cryptogram are compared as well as the data-set decrypted is compared with the server-calculated one. If the user desires authentication from the server to the user, then the second nonce is also decrypted from the cryptogram and sent back to the user. This approach can also be used to change the personal identification code.

According to an additional object of the invention, for authenticating a user using a communication terminal to access a server via a telecommunications network, a data set is generated from secure session establishment protocol messages exchanged between the communication terminal and the server; in the communication terminal an index is received from the server or created to look up a short key from a key list distributed out-of-band. The short key and a personal identification code are entered into the communication terminal and an authenticator - be it a cryptogram or a cryptographic hash are generated based on the data set, the personal identification code, the short key and up to two nonces. The authenticator is transmitted from the communication terminal to the server; in the server, the data set is generated from the secure session establishment protocol messages exchanged; and, in the server, the authenticator is verified using the data set generated in the server, the personal identification code and the short key in the server database by decryption or cryptographic hashing. Similarly that short key can also be used with the other embodiments described already.

Brief Description of the Drawings

The present invention will be explained in more detail, by way of example, with reference to the drawings in which:

Figure 1 shows a block diagram illustrating schematically an exemplary configuration of a computerized server, which is provided with a user authentication module and connected via a telecommunications network to communication terminals having authentication modules.

Figure 2 shows a block diagram illustrating schematically an exemplary configuration of an authentication module.

Figure 3 shows a block diagram illustrating schematically an exemplary implementation of an authentication module as an authentication token device.

Figure 4 shows a flow diagram illustrating an example of a sequence of steps executed according to an embodiment of the present invention for authenticating a user using a communication terminal to access a server via a telecommunications network. ('TAN entered and built on computer")

Figure 5 shows a flow diagram illustrating an example of a sequence of steps executed according to another embodiment of the present invention for authenticating the user. ("TAN entered and built on device")

Figure 6 shows a flow diagram illustrating an example of a sequence of steps executed according to yet another embodiment of the present invention for authenticating the user. ("TAN built in the user's brain")

Figure 7 shows a flow diagram illustrating an example of a sequence of steps executed according to a further embodiment of the present invention for authenticating the user. ("Soft-Token")

Figure 8 shows a flow diagram illustrating an example of an additional sequence of steps executed according to an embodiment of the present invention for authenticating a server being accessed via a telecommunications network by a user using a communication terminal. ("Server Authentication Code on device")

Figure 9 shows a flow diagram illustrating an example of an additional sequence of steps executed according to another embodiment of the present invention for authenticating the server. ("Server Authentication Code by soft token device")

Detailed Description of the Preferred Embodiments

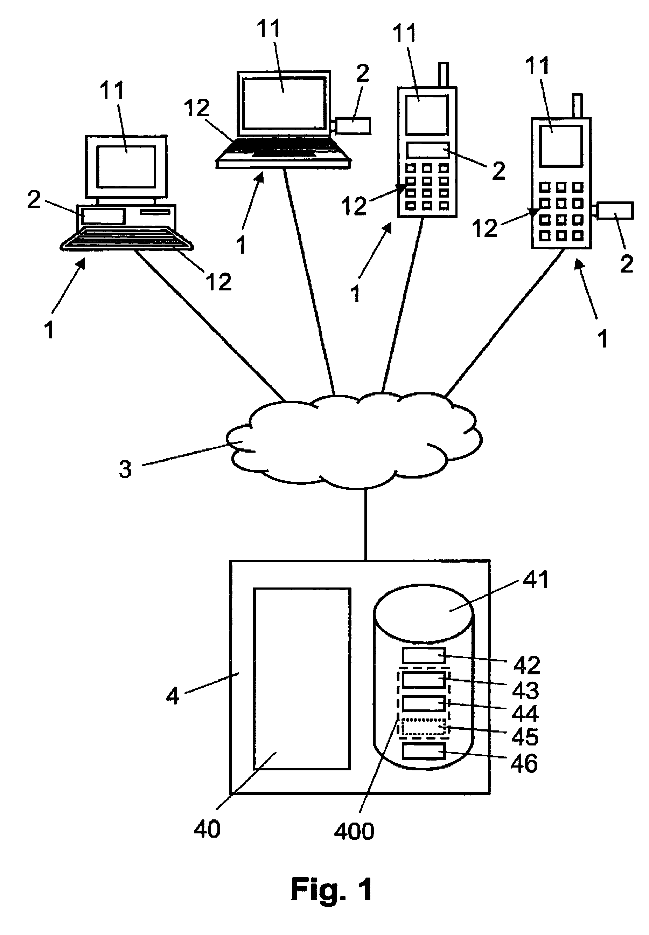

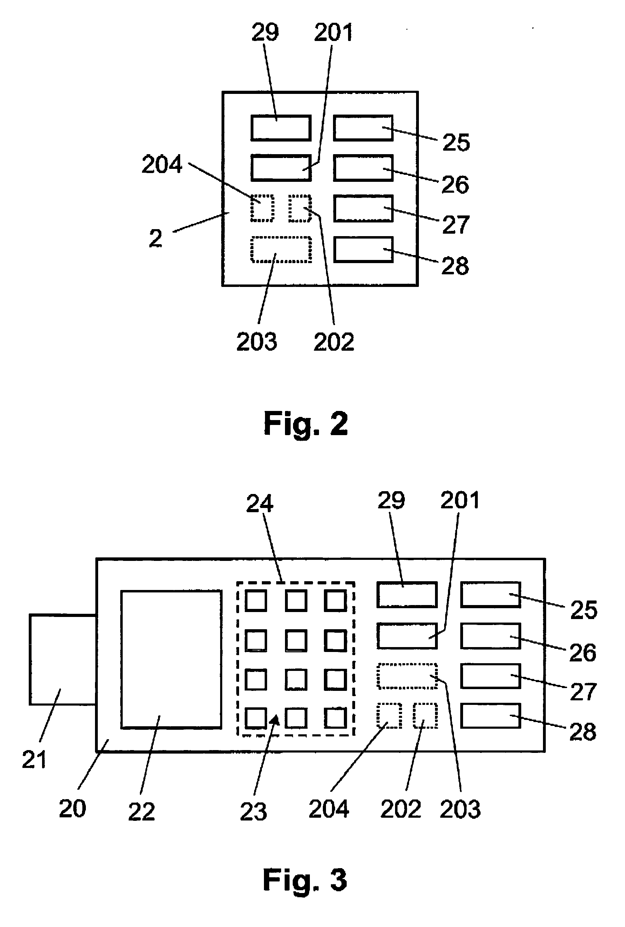

In Figure 1, reference numeral 1 refers to communication terminals configured for data exchange with computerized server 4 via telecommunications network 3. The communication terminals 1 include, but are not limited to fixed personal computers (PC), mobile laptop computers, mobile radio telephones and/or mobile personal digital assistants (PDA). The communication terminals 1 each have a display 11 and data entry means 12 such as a keyboard and a pointing device, e.g. a computer mouse, a track ball or the like. The communication terminals 1 include a client application, preferably a browser (e.g. Microsoft Internet Explorer or Mozilla Firefox), for accessing via telecommunications network 3 an on-line application hosted on server 4 through a secure session established with a secure session establishment protocol such as SSL/TLS. Furthermore, the communication terminals 1 include an authentication module 2, described later in more detail with reference to Figures 2 and 3.

The telecommunications network 3 includes fixed networks and wireless networks. For example, the telecommunications network 3 includes a local area network (LAN), an integrated services digital network (ISDN), the Internet, a global system for mobile communication (GSM), a universal mobile telecommunications system (UMTS) or another terrestrial or satellite-based mobile radio telephone system, and/or a wireless local area network (WLAN).

The computerized server 4 includes one or more computers, each having one or more processors, program and data memory, as well as an operating system and an on-line application accessible to telecommunication terminals 1 through a secure session established with a secure session establishment protocol such as SSUTLS. For example, server 4 is an Apache httpd or Jakarta Tomcat server. Furthermore, server 4 includes a user authentication module 40 and a database 41. Preferably, the user authentication module 40 and the database 41 are implemented as programmed software modules. The database 41 includes, for example, a master key (MK) 42, multiple sets of user data 400, each including a user identifier (ID_U) 43, a personal identification code (PIN_U) 44, and possibly a secret token key (K_T) 45. The personal identification code (PIN_U) 44 is a secret shared between a user and server 4 and may include biometric data (biometric identifier). Moreover, the database 41 includes a public key (k) 46. The certificate containing the public key (k) 46 may also be a user-specific part of a user data set 400, i.e. its serial number (SN_T) may temporarily be assigned with ID_U for the time a specific users employs a particular token. The user shall be able to choose whether the server shall remember the last SN_T - ID_U association or not. Doing so provides convenience even if the user plugs the token into various different communication terminals. On the other hand, loosing the token in this case may disclose the ID_U to the next user of that token - no threatening the authentication, but affecting the privacy of the user in its relation with the server.

As illustrated in Figure 2, each authentication module 2 includes several functional modules: a certification module 25, an authentication number generator 26, a display module 27, and possibly a server authentication module 28 and/or a selection module 29. Furthermore, the authentication module 2 comprises a memory module with an asymmetric key pair $(k, k^{-1})$ 201, including a private key $(k^{-1})$ and a public key $(k)$. For identification purposes, the authentication module 2 is associated with a publicly known token identifier SN_T. Preferably, the authentication module 2 is impersonal and compliant to PKSC#11. In an embodiment, the authentication module 2 comprises a memory module with the token identifier 203. The token identifier can also be stored on the communication terminal 1, for example by a form-pre-fill-feature of the browser. In addition, the authentication module 2 comprises either a memory module with a secret token key (K_T) 202 or - in a less preferable case - a memory module with a master key (MK) 204. The key pair $k$ and $k^{-1}$ can be the same for all authentication modules 2 (a reason why the tokens can be impersonal), whereas the secret token key K_T is unique and specific for an authentication module 2. The secret token key K_T can be generated from the token identifier SN_T using the master key MK according to:

$$K\_T = E_{\{MK\}} (SN\_T)$$

Consequently, there is no need to centrally store all secret token keys. Instead, the secret token key can be generated dynamically from the token identifier by anybody who knows the master key. The master key is typically possessed and held only by server 4. The master key or rather the secret token key is held in a tamper-proof key-store in a non-exportable way. It is recommended that also the token private key $k^{-1}$ is held by the same secure storage, but the latter becoming disclosed to the public may still not jeopardize the population of authentication modules 2 issued and their functioning according to the proposed method.

Preferably, the functional modules are implemented as programmed software modules. The computer program code of the software modules is part of a computer program product, preferably stored in a computer readable medium, either on a data carrier that can be inserted into the communication terminals 1, in memory integrated in the communication terminals 1, or in memory integrated in an authentication token device 20, illustrated in Figure 3, connected to the communication terminals 1.

In a preferred embodiment, the authentication module 2 is implemented as an impersonal authentication token device 20 compliant to PKSC#11. The preferred authentication module 2 is thus a secure hardware token that participates in the secure session establishment protocol, e.g. in the SSL/TLS handshake, via a standard interface such as Cryptoki ("PKCS#11: Cryptographic Token Interface Standard" by RSA Security Inc.) or Microsoft CryptoAPI (http://msdn.microsoft.comJlibrary/default.asp?url=l1ibrary/enus/seccrypto/security/cryptography__cryptoapl_and_capicom.asp). As is illustrated in Figure 3, in addition to the functional modules and the memory modules described above in the context of the authentication module 2, the authentication token device 20 includes a device interface 21, data entry means in the form of data entry keys 23 or a sensor 24, and possibly a display 22. Sensor 24 is configured for entry of biometric data (biometric identifier) and includes, for example, a fingerprint reader. The device interface 21 is configured for connecting the authentication token device 20 removably to the communication terminal 1. The device interface 21 is contact-based, including e.g. a USB interface (universal serial bus), or contactless, including e.g. a Bluetooth interface.

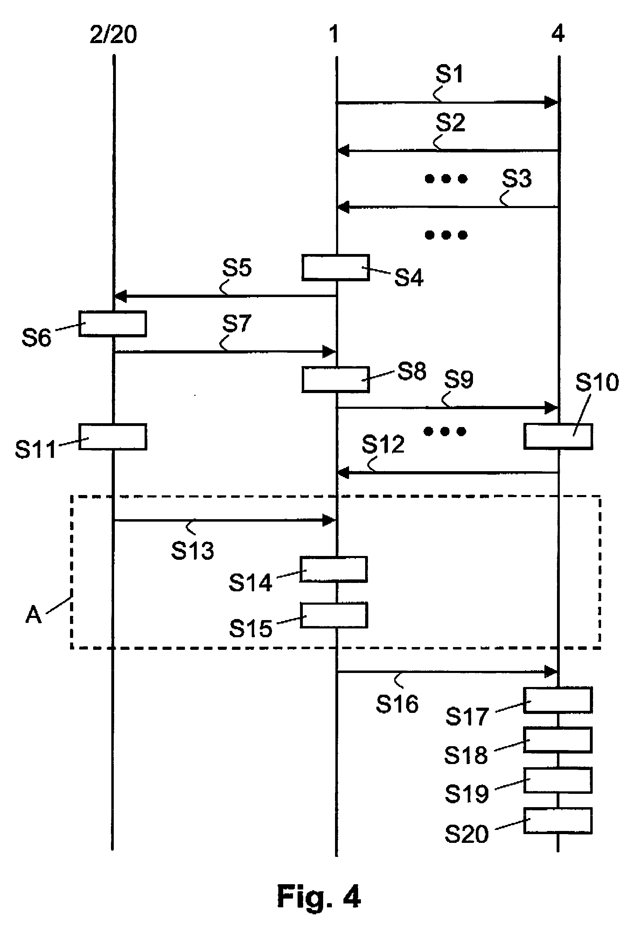

In the following paragraphs, described with reference to Figures 4, 5, 6, 7, 8, and 9 are possible sequences of executing the proposed user authentication method, as well as the functionality of the user authentication module 40 and the functional modules. The basic assumption is that the user infrastructure is not necessarily running a trusted computer base, but nonetheless, it must be assumed that SSL/TLS implementation in particular is not subverted e.g. by a Trojan executable and thus operating correctly. The end-user, however is not expected to be particularly skilled in information technology, for example, being able to solidly check the validity of a server certificate in an SSL/TLS protected session is not expected. Similarly, distinguishing "UBS.COM" vs. "U8S.COM" is not expected.

For accessing the on-line application hosted by server 4, the user directs the browser on his communication terminal 1 accordingly. As part of the secure session establishment protocol, for example a SSL/TLS handshake protocol, the server 4 authenticates itself using a public key certificate, it is assumed but not further addressed that the user does not properly verify this certificate as really belonging to the intended site.

As illustrated in Figure 4, in step S1, the communication terminal 1 initiates secure session establishment with server 4 according to a secure session establishment protocol, for example by transmitting to the server 4 a "ClientHello" message according to SSL/TLS.

In step S2, according to the secure session establishment protocol, the server 4 responds to the initiation message of step S1, for example by transmitting to the communication terminal 1 a "ServerHello" message according to SSL/TLS.

In step S3, as part of the secure session establishment protocol, the server 4 transmits a certification request to the communication terminal 1, for example a "CertificateRequest" message according to SSL/TLS.

In step S4, according to the secure session establishment protocol, a data set generating module of the communication terminal 1 builds a data set based on previous secure session establishment protocol messages exchanged with server 4. For example, the data set generating module builds the data set from previous secure session establishment protocol messages by applying a hash function according to SSL/TLS (there may be more secure session establishment protocol messages exchanged than explicitly listed here).

In step S5, the data set (hash) generated in step S4 is passed to authentication module 2 or authentication token device 20, respectively. Passing information between the communication terminal 1 and authentication module 2 or authentication token device 20, respectively, may be achieved, for example, through the device interface 21 using shared memory areas in communication terminal 1 and/or authentication token device 20.

In step S6, the certification module 25 generates an electronic signature by cryptographically signing the data set received in step S5 using the private key $k^{-1}$ from the memory module with the key pair 201.

In step S7, the electronic signature generated in step S6 is passed to the communication terminal 1.

In step S8, the communication terminal 1 prepares a response to the certification request received in step S3, for example a "CertificateVenfy" message according to SSL/TLS, including the data set generated in step S4 and the electronic signature generated in step S6.

In step S9, the secure session establishment protocol message prepared in step S8 is transmitted by the communication terminal 1 to server 4.

In step S10, using public key (k) 46, server 4 verifies the electronic signature received in step S9 on the basis of the data set received in step S9. Due to the fact that the authentication module 2 is impersonal, as $k^{-1}$ is typically the same for all tokens, the "CertificateVerify" message does not really authenticate the client. Instead, the 'CertificateVerify" message only makes sure that C uses a token to establish a secure session to the server and captures the data set (hash) for later use.

In step S11, the authentication number generator 26 generates an authentication base number N_T from the data set (hash) received in step S5. The authentication base number N_T is generated from the data set (hash), using the secret token key K_T associated with the authentication module 2:

$$N\_T = E\_\{K\_T\} (hash).$$

Preferably, N_T is shortened to a defined length of the personal identification code PIN_U (in one embodiment by truncating it).

In step S12, the user authentication module 40 of the server 4 requests from the communication terminal a transaction authentication number (TAN). In the case of public key 46 being in a token-specific public key certificate, a user identifier ID_U can be transmitted along with the request for example reflecting the most recent ID_U used with the given token 5N_T.

In step S13, the authentication base number N_T generated in step S11 is passed to the communication terminal 1.

In step S14, a control module of the communication terminal 1 requests and receives the personal identification code PIN_U from the user. Depending on the embodiment, the personal identification code PIN_U is entered using data entry means 12 or a sensor for biometric data (biometric identifier), e.g. a fingerprint reader (for example prints of different fingers are assigned different numbers or characters).

In step S15, the control module of the communication terminal 1 generates a transaction authentication number TAN from the personal identification code PIN_U received in step S14 and from the authentication base number N_T generated in step S11, for example using a pseudorandom function PRF in a way that is transparent to the user:

$$TAN = PRF\_\{PIN\_U\}(N\_T)$$

As a sub-embodiment, the PIN can be received by the communication terminal 1 and S15 can be executed on the impersonal authentication token device 20 and the TAN then be returned to communication terminal 1.

In this case, as a sub-embodiment, the steps to generate the "CortificateVerify" message and the steps to generate the transaction authentication number TAN can be grouped differently: if the function h used to create the data set (hash) satisfies the properties of a cryptographic hash function, then for example the HMAC construction (Krawczyk, H., et al., "HMAC; Keyed-Hashing for Message Authentication," Request for Comments 2104, February 1997) can be used to implement the hash function h: PIN_U will then become an argument to the CertifcateVerify calculation of a data set (hash'). In this embodiment the authentication base number N_T' becomes the transaction authentication number: TAN = N_T'. For this embodiment, it is essential that from having the data set (hash') and all but one inputs to the hash function h, namely PIN_U, it is not feasible to reconstruct PIN_U. HMAC is one function that fulfills this. HMAC can also be used for the pseudorandom function PRF and to generate the transaction authentication number TAN:

$$TAN = HMAC\_\{PIN\_U\}(N\_T) = h(K+opad||h(K+ipad||N\_T)).$$

In this case, K is derived from PIN_U in some unique and specified way (e.g., according to PKCS #5). The symbol + refers to the addition modulo 2 and || refers to the string concatenation. Opad and ipad are constant values. Especially when the user doesn't have to compute the TAN himself, other alphabets than just the decimal numbers [0.. 9] may be preferable.

The transaction authentication number TAN is valid for exactly one secure (SSL/TLS) session.

In step S16, in response to the request received in step S12, the communication terminal 1 transmits to the server 4 the generated TAN, a user identifier ID_U confirmed or newly entered by the user, as well as the token identifier SN_T entered by the user unless the token certificate containing k also comprises SN_T. SN_T is read from the memory module with the token identifier 203, or read from memory in the communication terminal 1 associated with a browser, for example.

In step S17, the user authentication module 40 of the server 4 determines in the database 40 the personal identification code (PIN_U) 44 assigned to the user identifier ID_U received in step S16.

In step S18, using the secret token key K_T associated with the authentication module 2, the user authentication module 40 generates an authentication base number N_T from the data set (hash) received in step S10. Preferably, the secret token key K_T is generated from the token identifier SN_T received in step S16 using the master key (MK) 42. However, if the secret token key (K_T) 45 is stored on server 4, it does not need to be recalculated with MK but can be entirely randomly chosen. If the token identifier SN_T is part of the client certificate of the token that is exchanged in the course of the secure session establishment protocol e.g. as "Client certificate" message between step S3 and S9, SN_T is not transmitted from the communication terminal 1 to the server 4 in step S16.

In step S19, the user authentication module 40 generates a transaction authentication number TAN from the personal identification code PIN_U determined in step S17 and from the authentication base number N_T generated in step S18.

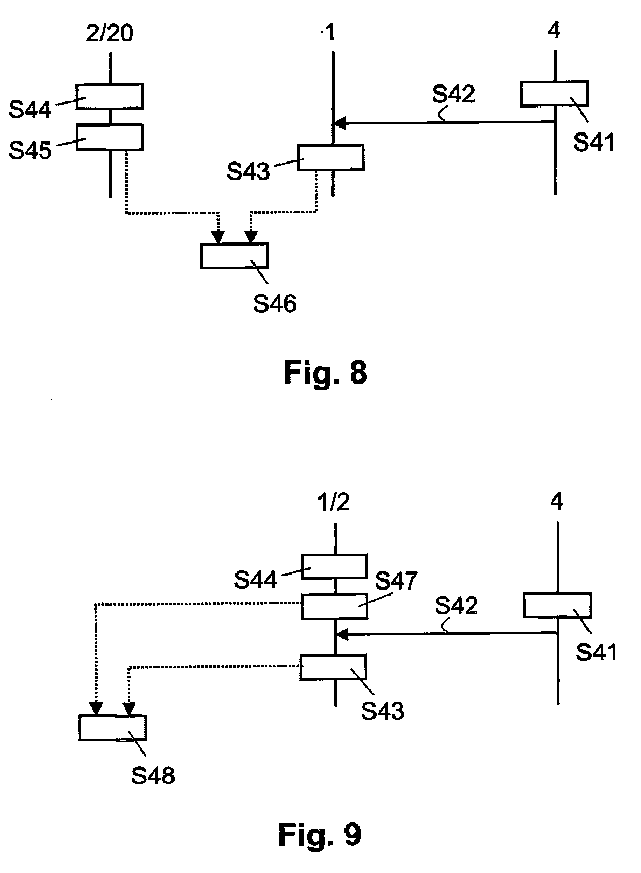

In step S20, the user authentication module 40 verifies the transaction authentication number received in step S16 through comparison with the transaction authentication number generated in step S19. Upon positive verification, the communication terminal 1 is provided access to the server 4 or, in an embodiment, the server continues in step S41 described later with reference to Figure 8.

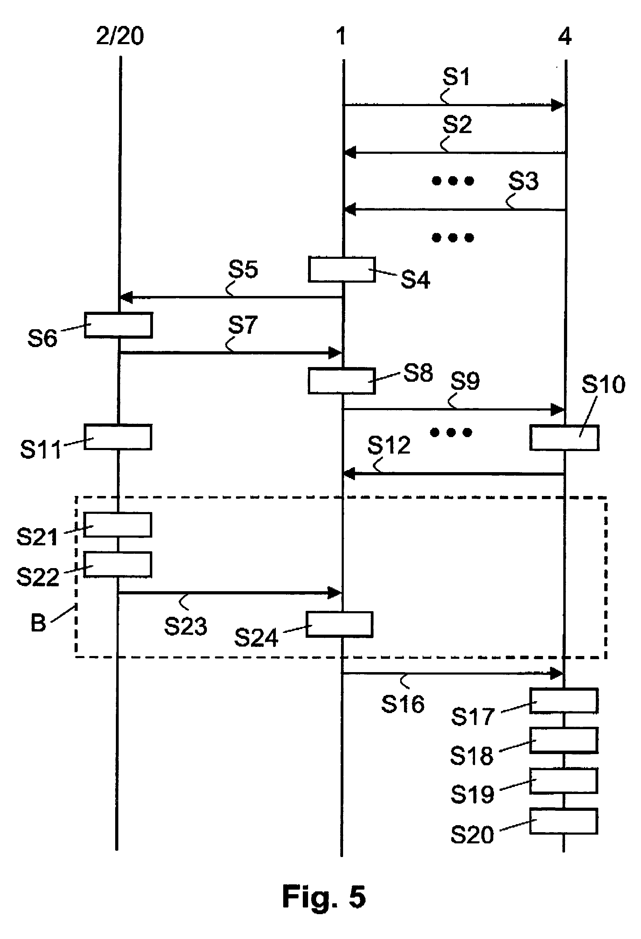

As is illustrated in Figure 5, in an alternative embodiment, block A including steps S13, S14 and S15, is replaced by block B, including steps S21, S22, S23 and S24.

In step S21, through data entry means 23 or sensor 24 of the authentication token device 20 or the authentication module 2, respectively, the personal identification code PIN_U is received from the user.

In step S22, the certification module 25 generates a transaction authentication number TAN from the personal identification code PIN_U received in step S21 and from the authentication base number N_T generated in step S11 as described above in the context of step S15. Accordingly, also the sub-embodiment described in the context of step S15 applies to the embodiment illustrated in Figure 5.

In step S23, the transaction authentication number TAN generated in step S22 is passed to the communication terminal 1.

In step S24, the transaction authentication number TAN is received in the communication terminal 1 and possibly displayed on display 11. Subsequently, the communication terminal 1 continues in step S16 as described above.

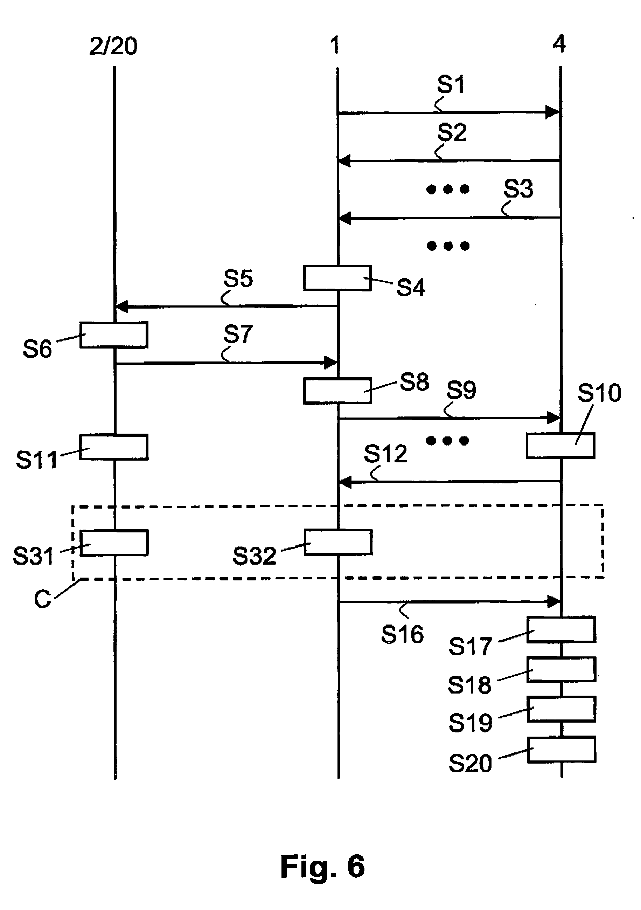

As is illustrated in Figure 6, in an alternative embodiment, block A including steps S13, S14 and S16, is replaced by block C, including steps S31 and S32.

In step S31, display module 27 shows the authentication base number N_T generated in step S11 on display 22.

In step S32, a control module of the communication terminal 1 receives from the user a transaction authentication number TAN. The transaction authentication number entered in step S32 is defined by the user as a combination of the authentication base number N_T shown on display 22 and the user's personal identification code PIN_U:

$$TAN = f(N\_T, PIN\_U)$$

In general, there are many possibilities to define an appropriate function f. In Molva, R., and G. Tsudik, "Authentication Method with Impersonal Token Cards," Proceedings of IEEE Symposium on Research in Security and Privacy, IEEE Press, May 1993, it is suggested to use the modulo 10 sum of its arguments. This suggestion is appropriate, but there are many other functions that work equally well. Subsequently, the communication terminal 1 continues in step S16 as described above.

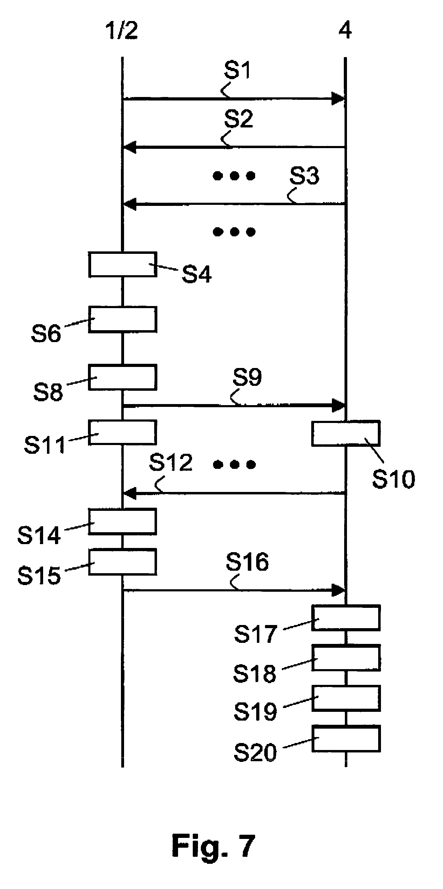

In the embodiment illustrated in Figure 7, the authentication module 2 is implemented exclusively by means of programmed software modules in communication terminal 1. Compared to the embodiment illustrated in Figure 4, the embodiment according to Figure 7 does not include steps S5, S7 and 13 because there is no data exchange between the communication terminal 1 and an authentication module (token device 20) external to the communication terminal 1. Information is exchanged between communication terminal 1 and authentication module 2 using software interfaces or shared memory areas in communication terminal 1. Otherwise, steps S1, S2, S3, S4, S6, S8, S9, S10, S11, S12, S14, S16, S17, S18, S19 and S20 are performed as described above with reference to Figure 4.

As illustrated in Figure 8, in step S41, server 4 generates a server authentication code from the data set (hash) received in step S9. The server authentication code A_T is generated by applying a public function g to the data set (hash) and by using for encryption the secret token key K_T determined in step S18:

$$A\_T = E\_\{K\_T\}(g(hash)).$$

The construction of A_T is basically the same as the construction of the authentication base number N_T. The only difference is that the data set (hash) is subject to a publicly known function 9 before it is encrypted with the secret token key K_T. The function g, in tum, need not be complex. It can be as simple as computing the complement of the hash value. Essential for this server authentication is that an adversary who might be able to see both the data set (hash) and the authentication base number N_T is not capable to construct A T because of the token key K_T being secret and of the characteristics of the encryption function E_(in one embodiment this could by a symmetric cipher such as triple-DES).

In step S42, the server authentication code generated in step S42 is transmitted to the communication terminal 1.

In step S43, the server authentication code received in step S42 is displayed by communication terminal 1 on display 11.

In step S44, the server authentication module 28 generates a server authentication code from the data set (hash) received in step S5 by applying the public function to the data set and by using for encryption the secret token key K_T associated with the authentication module 2.

In step S45, display module 27 displays the server authentication code generated in step S44 on display 22.

In step S46, server 4 is authenticated by the user verifying the server authentication code displayed on display 11 through comparison with the server authentication code displayed on display 22.

In the embodiment illustrated in Figure 9, the authentication module 2 is implemented exclusively by means of programmed software modules in communication terminal 1. Compared to the embodiment illustrated in Figure 8, in the embodiment according to Figure 9, in step S47, display module 27 displays the server authentication code generated in step S44 on display 11. Furthermore, in step S48, server 4 is authenticated by the user verifying on display 11 the server authentication code from server 4 through comparison with the server authentication code from server authentication module 28.

The authentication modules 2 proposed so far can be used to authenticate a user to a single institution (using a single personal identification code). In a further embodiment, the authentication module 2 is configured for application with a multitude of institutions, i.e. for authenticating a user to servers of multiple institutions. A preferred approach for implementing a multi-institution authentication module is to replace the master key MK with a set of institution-specific master keys MK_I and the token key K_T with a set of institution-specific token keys K_{IT}, where K_{IT} refers to the secret token key that the authentication module shares with institution I. Each server 4 is associated with a specific institution and uses the institution-specific secret token key for generating the authentication base number. Similar to the single-institution setting, a secret token key K_{IT} can be generated dynamically according to:

$$K\_\{IT\} = E\_\{MK\_I\}(SN\_T)$$

This key is then used to generate institution-specific values for the authentication base number and the transaction authentication number:

$$N\_\{IT\} = E\_\{K\_\{IT\}\}(Hash),$$

and

$$TAN = f(N\_\{IT\}, PIN\_\{IU\}).$$

The resulting TAN can then be used by the user for authentication to (the server 4 of) institution I. The personal identification code PIN_{IU} is not only user-specific but also institution-specific. Thus a multi-institution authentication module is associated with multiple institution-specific secret token keys either by having stored a set of multiple institution-specific secret token keys or by having stored sets of multiple institution-specific token identifiers and master keys for generating dynamically the institution-specific secret token keys. The selection module 29 is designed for the user to select one of multiple possible institution scopes for the authentication module 2 or the authentication token device 20, respectively. Set to an institution scope selected by the user, the authentication module 2 uses one respective institution-specific secret token key for generating the authentication base number. For example, the selection module 29 presents to the user a list of supported institutions on display 22 or 11, and receives user selections through data entry means 23 or 12. In an alternative implementation, specific keys of the data entry means 23 or 12 are assigned to specific institutions.

In a further embodiment where the authentication module 2 does not securely hold multiple K_{IT}s but only one, an online overarching issuing institution (AS) is added. This increases the flexibility of the set of institutions being part of the issuing group of the authentication module 2. The authentication module 2 creates a nonce R_T. The user has to copy two values from the display of authentication module 2, i.e. instead of SN_T, a TAN_AS is generated instead and needs to be entered after the successful SSL/TLS session establishment during the user authentication phase:

$$TAN\_I = f'(R\_T, PIN\_U\_I)$$

$$TAN\_AS = E\_MK(R\_T, Hash, ID\_I),$$

where ID_I is a short identifier string such as "XYZ" for "institution XYZ".

Institution I sees both values and cannot do anything with them alone. Institution I forwards TAN_AS to the issuing institution AS and receives R_T and Hash in return. It is assumed that the connection between AS and I is mutually authenticated and confidential.

Unless with criminal intent, TAN_I is never seen by the issuing institution AS and thus there is no risk that the issuing institution AS can determine PIN_U_I. However, it is recommended in this embodiment to only choose an f that is a strong cryptographic hash function as discussed before.

Similarly, this approach protects institutions I_1 ... I_n from attempting to learn each other's users' PINs.

This embodiment simplifies greatly the addition of new institutions. In essence, additional ID_I_n strings can be simply added to authentication modules 2. If the authentication module 2 is flooded with bogus ID_I strings, this becomes a usability concern but doesn't really undermine the security of the proposed method otherwise.

In an embodiment, the authentication module 2 or the authentication token device 20, respectively, is used to complement a "one-time-password" (OTP) system (e.g., Lamport-style OTPs (Lamport, L., "Password Authentication with Insecure Communication," Communications of the ACM, Vol. 24, 1981, pp. 770-772) or SecurID tokens (http://www.rsasecurity.com/)).In this case, the user employs the OTP as input for f (instead of PIN_U). Everything else remains essentially the same.

In another embodiment a biometric authentication step is added before the authentication token device 20 is activated. This implies that the token is personalized in a separate process and only starts serving an at least "temporary" owner of the token if the biometrics match.

In a further embodiment, if the biometric characteristics B_U of the user are not used to enter the PIN_U as described before, the biometric data is included in the calculation of the authentication base number N_T. Also, the server in this embodiment stores B_U on top of PIN_U and thus, the authentication module 2 remains fully personally transferable.

$$N\_T'' = E\_\{K\_T\}(Hash, B\_U)$$

It must be pointed out that different sequences of steps illustrated in Figures 4, 5, 6, 7,8 and 9 are possible without deviating from the scope of the invention.

Embodiment for Changing the Personal Identification Code

From an end-user education perspective, it is important to have a simple behavioral guideline. For all embodiments described, this certainly will be "Never enter your current or a new personal identification code into the web-browser!" For the embodiments including additional hardware, such as a module for entering the personal identification code, the guideline will even be: "Never enter the PIN into your screen/main keyboard!". Preferably, however, it must be possible for the user to change periodically and on his initiative his personal identification code PIN_U.

For example, for changing the personal identification code PIN_U, another secure session is established, essentially executing the same steps as described above. Particularly, as shown in Figures 4, 5, or 7, subsequent to steps S1 to S10, in step S11 an authentication base number N_T is generated.

Responsive to user or server instructions related to changing the personal identification code PIN_U, in step S14 or step S21, respectively, the old personal identification code PINold_U and a new personal identification code PINnew_U are received from the user in the communication terminal 1, the authentication token device 20, or the authentication module 2, respectively. Preferably, to avoid typing errors, the new personal identification code PINnew_U is confirmed through double entry.

In steps S15 or S22, respectively, rather than generating a transaction authentication number TAN, an identification change code (PCC) is generated. Essentially, the PRF used for calculating the PCC must make the personal identification code recoverable. For example an exclusive-or (XOR) function has this characteristic.

The PCC then is computed as PCC = $f_0$(N_T, PINold_U, PINnew_U) for an appropriately chosen function $f_0$. For example, if f represents a digit-wise addition modulo 10, $f_0$ can be defined as:

$$f_0 \text{ (N\_T, PINold\_U, PINnew\_U)} = f(f(\text{N\_T, PINold\_U}), \text{PINnew\_U}).$$

For example, if N_T = 123, PINold_U = 345, and PINnew_U = 781 then f(N_T, PINold_U) = 468 and f(f(N_T, PINold_U), PINnew_U) = 149.

Subsequently, in steps S16, S23, S24, the identification change code (PCC), rather than the transaction authentication number TAN, is communicated to the server 4. Steps S17 and S18 are performed as described above. In steps S19 and S20, consequently, rather than verifying the transaction authentication number TAN, the server 4 derives PINnew_U from the PCC submitted by the user, while ensuring (through verification of PINold_U) that it really was the legitimate user who changed the personal identification code PIN_U and not somebody who for example exploited an unlocked terminal, where an ongoing session was left unattended by the legitimate user. In the example given for $f_0$, no defense against blind permutation attacks that could lead to a denial of service is given. However, in the context of the currently predominant session establishment protocols (SSUTLS), complementary message integrity protection will prevent this attack.

In another embodiment changing the personal identification code PIN_U is implemented with three secure session establishments.

Number one, where the user has to re-provide PINold_U; number two, where the user presents PINnew_U; and number three, where the user represents the PINnew_U to avoid typing errors.

If the PIN-change is server-initiated, in order to signal the state of this protocol, the server can advertise pseudo-"DistinguishedName certificate_authorities" as outlined in http://www.rfc.net/rfc2246.html#s7.4.4. - a different authority for each of the three steps. Similarly, the token would need to have four different certificates, namely one for regular authentication and three for this embodiment.

Alternatively, when calculating the authentication base number N_T, the authentication token device 20, or the authentication module 2, respectively, includes a step-identifier. Thus, the number of different certificates needed on the authentication token device 20, or the authentication module 2, respectively, could be reduced.

If the change of the personal identification code is client-initiated, the server should at least offer two CAs, one for the regular authentication and one for step 1 of the change of the personal identification code.

Embodiment with Encryption-free Authentication Module

In another embodiment, the authentication token device 20, or the authentication module 2, respectively, does not need to be configured for encryption.

In this embodiment, the authentication base number N_T is calculated by a cryptographic hash function such as HMAC using the token key K_T as a secret. This offers the same security at some less computational overhead. The need for a shared secret and secure storage persists with this embodiment For example, the cryptographic hash (CH), as outlined in the sub-embodiment described in the context of step S15, can be used to replace the encryption used in step S11:

$$N\_T = CH\_\{K\_T\} \text{ (hash).}$$

This applies also to the other uses of encryption such as in steps S41 or S44.

Embodiments Without Transaction Authentication Number (TAN)

In this embodiment, the personal identification code PIN_U is entered as part of step S4, in a manner as described previously in the context of steps S14 or S21. Subsequently, a cryptographic hash is generated from the personal identification code and from the secure session establishment protocol messages exchanged between the communication terminal and the server 4. For protocol flow, but not security purposes, it may be useful to also include the serial number SN_T in this step. The cryptographic hash is generated with a so-called "keyed hash function" using as a hash key a secret shared with the server 4. Depending on the embodiment, used as a hash key are the token key K_T, the personal identification code PIN_U, or a pre-master-secret used as the basis for establishing the session key in the secure session establishment protocol. Particularly, if the personal identification code PIN_U is a well-chosen secret, the personal identification code PIN_U can be used as the hash key. Thereby, the authentication token device 20 is relieved from having its own secret token key K_T or private signing key k-1 or both, such that the authentication module 2 or authentication token device 20, respectively, is only a "trusted observer". The server 4 will immediately detect if any application level instruction, such as "send a large money amount to person xyz", comes from within the authenticated SSL session or not.

For example, in step S5, the data set (hash), generated by the communication terminal 1 from the secure session establishment protocol messages exchanged with server 4, and the personal identification code PIN_U are passed to the authentication module 2 or authentication token device 20, respectively. In step S6, the certification module 25 generates the cryptographic hash from the data set (hash) and the personal identification code PIN_U. Generating the electronic signature in step S6 is optional. In step S7, the cryptographic hash (with or without electronic signature) is passed to the communication terminal 1. In this sub-embodiment, the PIN_U can also only be entered by the user in step S6 directly into authentication token device 20.

Alternatively, the cryptographic hash is generated in step S4 from the personal identification code PIN_U and from the secure session establishment protocol messages exchanged between the communication terminal 1 and the server 4. Consequently, steps S5 to S7 are omitted because all the necessary steps are performed in step S4.

In step S8, the communication terminal 1 prepares a response to the certification request received in step S3, for example a "CertificateVerify" message according to SSL/TLS, including the cryptographic hash generated in step S6 or S4, respectively, and a user identifier ID_U confirmed or newly entered by the user.

In step S10, the server 4 generates the cryptographic hash, using the user's personal identification code stored in the server 4, and verifies authenticity of the user based on a comparison of the cryptographic hash generated in the server 4 and the cryptographic hash received from the communication terminal in step S9. Upon positive verification, the communication terminal 1 is provided access to the server 4, for example.

If the server 4 is to be authenticated to the user, the server 4 continues in step S41. However, in a further sub-embodiment, the server authentication code A_T is displayed immediately after steps S4-S6.

Embodiments with External Challenge/Response Device

In this embodiment, the authentication module 2 is implemented exclusively by means of programmed software modules in communication terminal 1, as illustrated in Figure 7. Steps S1, S2, S3, S4, S6, S8, S9, S10, and S11 are performed essentially as described above with reference to Figure 4. As part of step S11, the authentication base number N_T is shown on display 11. In a sub-embodimertt, the authentication module 2 acts as a trusted observer only and the authentication base number (N_T''') is generated as short derivative (e.g. 6 digits) of the signature returned as part of the regular CertificateVerify message. Essentially, the authentication base number N_T can be any other session-related identifier that cannot be determined by a man in the middle in an exploitable way, for example a short digest of the session-key and the server public key might be another way to compute the authentication base number N_T as a secure session identifier, resistant to man in the middle attacks. In this embodiment, having a secret token key K_T is therefore optional. Similarly, k-1 may be optional as well.

Subsequently, in a first step, not illustrated, the user enters the authentication base number N_T (as a client-side-generated challenge) and his personal identification code PIN_U into a conventional (non-galvanic) challenge/response token device that is not connected to the communication terminal 1. Responsive to the values entered, the challenge/response token device generates and displays a token response value based on its own logic. In a second step, not illustrated, replacing steps S14 and S15, the user enters the token response value from the challenge/response token device into the communication terminal 1.

In step S16, in response to the request received in step S12, the communication terminal 1 transmits to the server 4 the token response value previously entered, instead of the transaction authentication number TAN.

Essentially, steps S17 to S20 are performed by the server 4 as described above with reference to Figure 4 or 7, respectively, however, corresponding to the logic of the challenge/response token device, the server 4 generates and verifies the token response value rather than the transaction authentication number TAN. Upon positive verification of the token response value, the communication terminal 1 is provided access to the server 4 or, in an embodiment, the server 4 continues in step S41.

For example, the challenge/response token device is based on EMV chips (Europay International, MasterCard International and Visa Intemational), in circulation on millions of bank- and credit-cards (see http://www.emvco.com). Some token response values generated by EMV chips do not include the personal identification code PIN_U. The card ICC as per the MasterCard Chip Authentication Program (CAP) shares a key with the server (Issuer). After correct entry of the personal identification code PIN_U and a challenge (authentication base number N_T), a cryptogram (typically with 3DES) will be created that contains among others (e.g. CW), the challenge, and the authoritative confirmation that a correct personal identification code PIN_U has been presented. Typically, an unconnected reader with a numeric keypad is used to enter the authentication base number N_T and the personal identification code PIN_U and the token response value is displayed on the unconnected reader's display.

The authentication base number N_T is entered into the device by the user typing it into a keyboard or via other means such as for example graphical flickering as described on http://axsionics.ch. The important enhancement is that the flickering-challenge, normally entirely created by the server, needs to be amended by some client-side-generated secure session identifier. Since the implementation of this flickering method preferably has some client-side active component, such as a browser (java) plugin, Flash, or javascript, in some embodiments, this can be used to retrieve, for example, the server public key and a digest of session key or other types of the secure session identifier, and include it into the flickering-image generation, i.e. the pertinent protocol's challenge. This active component is preferably signed because a man in the middle will otherwise easily inject an altered version of this that might present the authentication base number N_T of the man in the middle instead of the authentication base number N_T genuinely built on the client communication terminal 1.

in a further sub-embodiment ("No client-certificate authentication"), a client application software module of the communication terminal 1, for example a browser, is provided with an authentication number generator 26 configured to calculate the authentication base number $N\_T^{iv}$ as a secure session identifier, resistant to man in the middle attacks, through read-only access to the secure session establishment protocol stack. Thus, in this sub-embodiment, there is no need to perform client certificate authentication, i.e. there is no need to perform steps S3-S10 for a unilateral secure session and token device drivers such as MS-CAPI or PKCS11 are no longer needed.

The above-mentioned authentication number generator 26 is configured to calculate, in step S11, the authentication base number $N\_T^{iv}$ as a secure session identifier, resistant to man in the middle attacks, as outlined below:

a) the authentication base number $N\_T^{iv}$ is generated based upon a data set (hash), based on secure session establishment protocol messages exchanged between the communication terminal 1 and the server 4, that cannot be known by the man in the middle (e.g. due to having the premaster-secret prior to be encrypted as input); or

b) the authentication base number $N\_T^{iv}$ is generated from known input data and a secret key, albeit in this embodiment, the need for a secret token key K_T in the client application should be avoided; or

c) the authentication base number $N\_T^{iv}$ is generated based upon input data that all are known to the man in the middle as well, but by their logical connection to the secure session establishment protocol, they ensure resistance against a man in the middle, In this embodiment, using the public key of the server and something that ensures freshness (nonce or timestamp) would be sufficient. For example the hash of the encrypted premaster-secret, i.e. a message observable by the man in the middle, could serve as such a nonce. In this case, it is important the Challenge/Response device's logic ensures that by knowing the challenge and observing the response, the man-in-the-middle cannot mount a(n offline) PIN-guessing attack.

For example, the authentication number generator 26 is configured to display this man-in-the-middte-resistant secure authentication base number $N\_T^{iv}$ (challenge) in the client application. For instance, the authentication number generator 26 makes the challenge visible to the user in a defined area, e.g. in the bottom right of the browser, when the user moves the pointer of the mouse over this area, e.g. over the lock displayed in the browser.

As described above, the user enters the authentication base number $N\_T^{iv}$ (as challenge) and his personal identification code PIN_U into the challenge/response token device, and the method proceeds as described above.

Embodiments Without Secret Keys but Nonces on the Client Side

As outlined in the Request for Comments 2246, there is a possibility of overloading the "anonymous" structure of the CertificateVerify message with an arbitrary response. This offers the possibility that the token no longer needs a secret token key K_T. In this embodiment, in analogy to "Embodiments Without Transaction Authentication Number (TAN)" described above, in step S6, the authentication module 2 or authentication token device 20, respectively, generates a cryptogram by encrypting the hash (data set), the personal identification code PIN_U, and additionally one or two truly random nonces N_Tt (and N_Ta) with a public key k_S (a nonce being a "number used once"). The public key k_S, in turn, must be pre-installed on the authentication module 2 or authentication token device 20, respectively, to prevent a man in the middle to fool the system into using his own key k_MITM. The public key k_S either belongs to server 4 or an authentication server AS in the multi-institution case (the authentication server being associated with public key k_AS). Optionally, the input values of the cryptogram are signed with the secret key k-1, prior to being encrypted with the public key k_(A)S. Similarly, as per the sub-embodiment of S15, a cryptographic hash function (HMAC) can be applied before the encryption.

In step S7-S9, instead of transmitting an "electronic signature", as required by most "secure session establishment protocols", this cryptogram is transmitted as unstructured data, without any restrictions imposed by protocol specifications. In implementations where other protocol parts are also executed on an authentication token device 20 and not in a client application of the communication terminal 1 - for example generating the session key - other protocol messages such as the "ClientKeyExchange" message could be used to transmit the cryptogram.

In step S10, the server 4 decrypts the cryptogram. This will provide to the server the nonce N_Tt, the personal identification code PIN_U, and possibly the nonce N_Ta. The nonce N_Tt is a "throw-away" nonce, added as a salt to prevent pin guessing attacks.

In step S10, server 4 also generates the "hash" as described in the context of step S4. Steps S11-S17 are not needed.

In steps S18-S20, the authentication module 40 no longer generates the authentication base number N_T and the transaction authentication number TAN, but simply compares the hash, and PIN_U as decrypted in step S10. The hash derived from the cryptogram is compared with the hash generated in the server 4, and the personal identification code PIN_U is compared with the one stored in the database 41. If the cryptographic hash function is used in S6, these values first also need to be cryptographically hashed on the server side before the comparison. All else remains equal.

If the server 4 shall also authenticate the server 4 to the user, instead of the calculations of steps S41 to S43, the server simply displays to the user the nonce N_Ta that it decrypted from the cryptogram. The comparison of steps S44-S46 remain the same; no calculations are needed, but the nonce N_Ta is simply displayed on display 22.

As an addition to this embodiment also a protocol to change the personal identification code PIN_U can be implemented. The new personal identification code PIN_U simply is another input to the cryptogram of S6.

Despite the fact that the secure session establishment protocol standards do not specify fixed field lengths for their protocol fields, some client application implementations may rigidly limit the allocated memory, e.g. for the "CertificateVerify" message. In such cases a focus on space optimizing public key cryptography, such as elliptic curve cryptography, is needed.

There is also a sub-embodiment to this embodiment where the personal identification code PIN_U is calculated by the user. For this purpose, in step S6, the personal identification code PIN_U is omitted. The nonce N_Tt is displayed to the user as described for step S31, and a transaction authentication number TAN is calculated as described for step S32. Other variants for generating the transaction authentication number TAN from the authentication base number N_T and the personal identification code PIN_U described above can be applied analogously to the authentication base number N_T.

Embodiments with Short, (Possibly Single-use) Secret Keys

Code (or key) tables such as scratch-lists or indexed scratch lists (e.g. "iTAN", "Access Card") are broadly used by financial institutions, but they are vulnerable to men in the middle attacks. The above "Embodiments Without Secret Keys but Nonces on the Client" can be extended to achieve a level of "two factor" authentication:

Step S6a (in Figures 4, 5, 6, and 7 represented as step S6): If an Access Card has for example 100 entries, i.e. typically short "keys" of 4-6 numerical characters (K_SSU), the data set generated in step S4 (hash of the previous handshake message) is compressed until it can serve as a lookup index on the key table of the Access Card.

In S6b (in Figures 4, 5, 6, and 7 represented as step S6), the compressed value - typically 2 characters long - is displayed as an index (for example by the authentication module 2 or authentication token device 20). There are alternative ways to communicate the look-up index to the client application, for example the above-mentioned "DistinguishedName certificate_authorities" list as a "hidden channel" may represent another approach to let the authentication module 2 or authentication token device 20, respectively, know what index to display in step S6b.

In step S6c (in Figures 4, 5, 6, and 7 represented as step S6), in addition to the values entered previously in step S6, entered also is the key K_SSU looked up by means of the session-derived lookup index. Due to the high degree of randomness of the nonce N_Tt, the key K_SSU can be used several times. If the client applications do not allow to transport cryptograms that are longer than the normal messages in the secure session protocol establishment messages (in particular, the CertificateVerify message), there is yet another embodiment based on "Embodiments Without Transaction Authentication Number (TAN)" and the above is extended by the following steps:

Step S6a remains as described above. Because the randomness of the nonce N_Tt is not available, such a key K_SSU can only be used once. In step S6b' (replacing step S6b), the server 4 records all lookups used so far. If there is a collision, a re-handshake is triggered by the server 4. This is repeated until an unused index is reached. The "DistinguishedName certificate_authorities" approach may be more efficient in this case. After a certain level of usage a new Access Card is distributed out-of-band.

In step S6c' (replacing step S6c), the cryptographic hash is generated without nonces and instead of the secret key K_T, the key K_SSU is used. Then, again the subsequent steps remain up to step S15. In step S15, because the key K_SSU is short, it is important that the cryptographic hash function is such that a valid cryptographic hash N_SSU = CH_{K_SSU} (hash, PIN_U) cannot only be obtained by one pair of a personal identification code PIN_U and a key K_SSU, but many pairs of personal identification codes PIN_U and keys K_SSU - up to the size of the combined "key-space" of both the personal identification code PIN_U and key K_SSU. By this, an attacker will not know whether he has found the correct personal identification code PIN_U in a guessing attack, but will always have to present the cryptographic hash N_SSU to the server 4 in order to validate his guesses. Also because the hash is typically 40 bytes long, guessing dictionaries need to be much longer than this combined key - on top of binding the session to the authentication, here the hash serves as a "salt". If this key space has sufficient entropy, such that a guessing attack takes longer than a typical server-side login timeout, this can serve as a low-end solution.

To prevent key logging attacks on the personal identification code PIN_U, instead of entering separately into the terminal the personal identification code PIN_U and the key K_SSU, a combination thereof may be entered instead.

Similarly, the key K_SSU could also be used with the main and other embodiments described above based on transaction authentication numbers TANs.

### Claims

1. A method of authenticating a user using a communication terminal to access a server via a telecommunications network, the method comprising:

   receiving from the user a personal identification code;
   generating in an authentication module associated with the communication terminal a digital signature from a data set, using a private key of a key pair associated with the authentication module;
   generating in the authentication module an authentication base number from the data set, using a secret token key associated with the authentication module;
   generating a transaction authentication number from the authentication base number;
   using the personal identification code in one of generating the digital signature and generating the transaction authentication number,
   transmitting the data set and the digital signature from the communication terminal to the server;
   verifying in the server the digital signature using a public key of the key pair,
   transmitting the transaction authentication number from the communication terminal to the server,
   generating in the server an authentication base number from the data set received from the communication terminal, using the secret token key for encrypting the data set; and
   verifying in the server the transaction authentication number using the authentication base number generated in the server.

2. The method according to claim 1, wherein the transaction authentication number is generated from the authentication base number and the personal identification code; wherein the transaction authentication number and a user identifier are transmitted from the communication terminal to the server, and wherein the transaction authentication number is verified in the server using the authentication base number generated in the server and a personal identification code assigned to the user identifier.

3. The method according to one of the claims 1 or 2, wherein the data set is transferred from the communication terminal to the authentication module through a device interface, connecting the authentication module to the communication terminal; wherein the key pair and the secret token key are stored in the authentication module; and wherein the digital signature is transferred from the authentication module to the communication terminal through the device interface.

4. The method according to one of the claims 1 to 3, wherein a token identifier is transmitted from the communication terminal to the server together with the transaction authentication number, and wherein the secret token key is determined in the server based on the token identifier.

5. The method according to claim 4, wherein a master key is stored in the server, and wherein the secret token key is generated in the server from the token identifier using the master key for encrypting the token identifier.

6. The method according to one of the claims 1 to 5, wherein the authentication base number is transferred from the authentication module to the communication terminal; wherein the personal identification code is received in the communication terminal from the user; and wherein the transaction authentication number is generated in the communication terminal from the authentication base number and the personal identification code.

7. The method according to one of the claims 1 to 5, wherein the personal identification code is received in the authentication module from the user; wherein the transaction authentication number is generated in the authentication module from the authentication base number and the personal identification code; and wherein the transaction authentication number is transferred from the authentication module to the communication terminal.

8. The method according to one of the claims 1 to 7, wherein the personal identification code is received together with a biometric identifier from the user; and wherein the transaction authentication number is verified in the server using the authentication base number generated in the server and a biometric identifier stored in the server together with a personal identification code assigned to the user identifier.

9. The method according to one of the claims 1 to 5, wherein the authentication base number is displayed by the authentication module; and wherein the transaction authentication number, generated by the user from the personal identification code and the authentication base number displayed by the authentication module, is received in the communication terminal from the user.

10. The method according to one of the claims 1 to 9, wherein after successful verification of the transaction authentication number in the server, a server authentication code is generated in the server from the data set, applying a public function to the data set and using the secret token key for encryption; wherein the server authentication code is transmitted from the server to the communication terminal; wherein the server authentication code received from the server is displayed by the communication terminal; wherein a server authentication code is generated in the authentication module from the data set, applying the public function to the data set and using the secret token key for encryption; and wherein the server authentication code generated in the authentication module is displayed by the authentication module for visual verification with the server authentication code displayed by the communication terminal.

11. The method according to one of the claims 1 to 10, wherein the data set is generated in the communication terminal as a hash from secure session establishment protocol messages exchanged between the communication terminal and the server.

12. The method according to one of the claims 1 to 11, wherein the user selects one of multiple possible institution scopes for the authentication module; wherein the institution scope selected by the user makes the authentication module use one institution-specific secret token key of a set of multiple secret token keys for generating the authentication base number, wherein the server is associated with a specific institution and uses the institution-specific secret token key for generating the authentication base number; and wherein the server uses an institution-specific personal identification code for verifying the transaction authentication number.

13. An authentication token device, comprising:

    a device interface for connecting the device with a communication terminal;
    a first memory module having stored therein a key pair, including a private key and a public key;
    a second memory module having stored therein a secret token key;
    a certification module for receiving though the device interface a data set from the communication terminal, for generating a digital signature from the data set using the private key, and for transferring the digital signature through the device interface to the communication terminal; and
    an authentication number generator for generating an authentication base number from the data set, using the secret token key for encrypting the data set.

14. The device according to claim 13, wherein the device comprises data entry means for receiving from the user a personal identification code; and wherein the authentication number generator is configured to generate one of the authentication base number and a transaction authentication number, based on the authentication base number,

using the personal identification code.

**15.** The device according to claim 13, wherein the authentication number generator is configured to receive a personal identification code from the communication terminal through the device interface, and to generate one of the authentication base number and a transaction authentication number, based on the authentication base number, using the personal identification code.

**16.** The device according to claim 13, wherein the device comprises a sensor for receiving from the user a biometric identifier; and wherein the authentication number generator is configured to generate one of the authentication base number and a transaction authentication number, based on the authentication base number, using the biometric identifier.

**17.** The device according to one of the claims 14 to 16, wherein the authentication number generator is configured to transfer one of the authentication base number and the transaction authentication number through the device interface to the communication terminal.

**18.** The device according to one of the claims 14 to 16, wherein the device comprises a display module for displaying at least part of one of the authentication base number and the transaction authentication number.

**19.** The device according to one of the claims 13 to 18, wherein the device comprises a server authentication module for generating a server authentication code from the hash value, applying a public function to the data set and using the secret token key for encryption, and a display module for displaying the server authentication code.

**20.** The device according to one of the claims 13 to 19, wherein the second memory module has stored therein a set of multiple institution-specific secret token keys; and wherein the device comprises means for selecting one of multiple possible institution scopes for the device and for using one institution-specific secret token key of the set for generating the authentication base number.

**21.** A computer program product comprising computer program code means for controlling one or more processors of a communication terminal, such that the communication terminal
receives from a user a personal identification code;
generates a digital signature from a data set using a private key of a key pair;
generates an authentication base number from the data set, using a secret token key for encrypting the data set;
generates a transaction authentication number from the authentication base number;
uses the personal identification code in one of generating the digital signature and generating the transaction authentication number;
transmits the data set and the digital signature to a server; and
transmits the transaction authentication number to the server.

**22.** The computer program product according to claim 21, comprising further computer program code means for controlling the processors such that the communication terminal receives a biometric identifier from the user through a sensor of the communication terminal, and that the communication terminal uses the biometric identifier together with the personal identification code.

**23.** The computer program product according to one of the claims 21 or 22, comprising further computer program code means for controlling the processors such that the communication terminal receives from the server a server authentication code, that the communication terminal generates a server authentication code from the hash value, applying a public function to the data set and using the secret token key for encryption, and that the communication terminal verifies the server authentication code received from the server based on the server authentication code generated by the communication terminal.

**24.** The computer program product according to one of the claims 21 to 23, comprising further computer program code means for controlling the processors such that the communication terminal generates the data set from secure session establishment protocol messages exchanged between the communication terminal and the server.

**25.** The computer program product according to one of the claims 21 to 24, comprising further computer program code means for controlling the processors such that the communication terminal receives instructions for selecting one of multiple possible institution scopes, and that the communication terminal uses one institution-specific secret token key of a set of multiple secret token keys for generating the authentication base number.

26. A computerized server, configured for exchanging data with a communication terminal via a telecommunications network, the server comprising a user authentication module configured

to receive a data set and a digital signature from the communication terminal,

to verify the digital signature using a public key associated with an authentication module of the user,

to receive a transaction authentication number from the communication terminal,

to generate an authentication base number from the data set received from the communication terminal, using a secret token key associated with the authentication module of the user for encrypting the data set, and

to verify the transaction authentication number using the authentication base number.

27. The server according to claim 26, wherein the user authentication module is configured to receive with the transaction authentication number a user identifier from the communication terminal, and to verify the transaction authentication number using the authentication base number and a personal identification code assigned to the user identifier.

28. The server according to one of the claims 26 or 27, wherein the user authentication module is configured to receive with the transaction authentication number a token identifier from the communication terminal, and to determine the secret token key based on the token identifier.

29. The server according to claim 28, wherein a master key is stored in the server, and wherein the user authentication module is configured to generate the secret token key from the token identifier using the master key for encrypting the token identifier.

30. The server according to one of the claims 26 to 29, wherein the user authentication module is configured to generate a server authentication code from the data set, after successful verification of the transaction authentication number, applying a public function to the data set and using the secret token key for encryption, and to transmit the server authentication code to the communication terminal.

31. A method of authenticating a user using a communication terminal to access a server via a telecommunications network, the method comprising:

receiving from the user a personal identification code;

generating a data set from secure session establishment protocol messages exchanged between the communication terminal and the server;

generating in an authentication module associated with the communication terminal a digital signature from the data set;

generating in the authentication module an authentication base number from the data set, using a secret token key associated with the authentication module;

generating a transaction authentication number from the authentication base number;

using the personal identification code in one of generating the digital signature and generating the transaction authentication number,

transmitting the digital signature from the communication terminal to the server,

verifying in the server the digital signature;

transmitting the transaction authentication number from the communication terminal to the server;

generating in the server an authentication base number from the secure session establishment protocol messages exchanged, using the secret token key; and

verifying in the server the transaction authentication number using the authentication base number generated in the server.

32. A method of authenticating a user using a communication terminal to access a server via a telecommunications network, the method comprising:

receiving from the user a personal identification code;

generating a data set from secure session establishment protocol messages exchanged between the communication terminal and the server;

generating in an authentication module associated with the communication terminal an authentication base number from the data set, using a secret token key associated with the authentication module;

generating a transaction authentication number from the authentication base number, using the personal identification code;

transmitting the transaction authentication number from the communication terminal to the server,

generating in the server an authentication base number from the secure session establishment protocol messages exchanged, using the secret token key; and

verifying in the server the transaction authentication number using the authentication base number generated in the server.

33. A method of changing a personal identification code by a user using a communication terminal to access a server via a telecommunications network, the method comprising:

receiving from the user an old personal identification code;

receiving from the user a new personal identification code;

generating a data set from secure session establishment protocol messages exchanged between the communication terminal and the server;

generating in an authentication module associated with the communication terminal an authentication base number from the data set, using a secret token key associated with the authentication module;

generating an identification change code from the authentication base number, the old personal identification code, and the new personal identification code;

transmitting the identification change code from the communication terminal to the server;

generating in the server an authentication base number from the secure session establishment protocol messages exchanged, using the secret token key; and

deriving in the server the new personal identification code from the identification change code, using the old personal identification code and the authentication base number generated in the server.

34. A method of authenticating a user using a communication terminal to access a server via a telecommunications network, the method comprising:

receiving from the user a personal identification code;

generating in an authentication module associated with the communication terminal a cryptographic hash from the personal identification code and from secure session establishment protocol messages exchanged between the communication terminal and the server, using as a hash key a secret shared with the server;

transmitting the cryptographic hash from the communication terminal to the server,

generating in the server the cryptographic hash using a personal identification code stored in the server;

verifying in the server authenticity of the user based on a comparison of the cryptographic hash received from the communication terminal and the cryptographic hash generated in the server.

35. The method according to claim 34, using as the hash key one of the personal identification code and a secret token key associated with the authentication module.

36. The method according to claim 34, wherein the method further comprises one of receiving a lookup index from the server and generating a lookup index from the data set; wherein the method further comprises determining in a code table a selected code using the lookup index; wherein the selected code is used as the hash key; and wherein the server generates the cryptographic hash using as the hash key a selected code from a code table stored in the server.

37. The method according to claim 36, wherein the server keeps track of selected codes used by the communication terminal; and wherein, for cases where the server determines that a selected code was previously used by the communication terminal, the server performs one of: reinitiating session establishment with the communication terminal, and communicating a not yet selected lookup index to the communication terminal.

38. A method of authenticating a user using a communication terminal to access a server via a telecommunications network, the method comprising:

generating a data set from secure session establishment protocol messages exchanged between the communication terminal and the server;

generating in an authentication module associated with the communication terminal an authentication base number from the data set;

entering the authentication base number and a personal identification code into a challenge/response token device, not connected to the communication terminal;

generating in the challenge/response token device a token response value based on the authentication base number and the personal identification code;

entering the token response value into the communication terminal;

transmitting the token response value from the communication terminal to the server;

generating in the server an authentication base number from the secure session establishment protocol messages exchanged; and

verifying in the server the token response value using the authentication base number generated in the server.

39. A method of authenticating a user using a communication terminal to access a server via a telecommunications network, the method comprising:

generating a data set from secure session establishment protocol messages exchanged between the communication terminal and the server;

generating in the communication terminal an authentication base number from the data set;

entering the authentication base number and a personal identification code into a challenge/response token device, not connected to the communication terminal;

generating in the challenge/response token device a token response value based on the authentication base number and the personal identification code;

entering the token response value into the communication terminal;

transmitting the token response value from the communication terminal to the server;

generating in the server an authentication base number from the secure session establishment protocol messages exchanged; and

verifying in the server the token response value using the authentication base number generated in the server.

40. A method of authenticating a user using a communication terminal to access a server via a telecommunications network, the method comprising:

generating a data set from secure session establishment protocol messages exchanged between the communication terminal and the server,

receiving from the user a personal identification code;

generating in the authentication module a cryptogram by encrypting the data set, the personal identification code, and at least one nonce, using a public key;

transmitting the cryptogram from the communication terminal to the server,

determining in the server the data set and the personal identification code by decrypting the cryptogram, using a private key;

verifying in the server authenticity of the user based on a comparison of the data set with a data set generated in the server from the secure session establishment protocol messages, and on a comparison of the personal identification code with a personal identification code stored in the server.

41. The method according to claim 40, wherein the method further comprises one of receiving a lookup index from the server and generating a lookup index from the data set, wherein the method further comprises determining in a code table a selected code using the lookup index; wherein the selected code is used in generating the cryptogram; wherein the server determines the selected code from the cryptogram, using the private key; and wherein verifying authenticity of the user includes comparing the selected code with a selected code determined by the server from a code table stored in the server.

42. The method according to claim 41, wherein the server keeps track of selected codes used by the communication terminal; and wherein, for cases where the server determines that a selected code was previously used by the communication terminal, the server performs one of: reinitiating session establishment with the communication terminal, and communicating a not yet selected lookup index to the communication terminal.

**Fig. 1**

**Fig. 2**

**Fig. 3**

**Fig. 4**

**Fig. 5**

EP 1 773 018 A1

Fig. 6

**Fig. 7**

2/20           1           4

S44

S45

S42

S41

S43

S46

**Fig. 8**

1/2           4

S44  S47

S42

S41

S43

S48

**Fig. 9**

**European Patent Office**

# EUROPEAN SEARCH REPORT

**Application Number**

EP 05 40 5716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/107798 A1 (HAMEAU PATRICE ET AL) 8 August 2002 (2002-08-08) | 13-20 | INV. H04L29/06 G06F1/00 |
| A | * abstract; figure 2 * | 1-12, 21-31 | |
| | * paragraph [0018] - paragraph [0026] * * paragraph [0036] - paragraph [0037] * * paragraph [0050] - paragraph [0059] * ----- | | |
| A | EP 1 396 779 A (ACTIVCARD IRELAND LIMITED) 10 March 2004 (2004-03-10) | 1,8,16, 21,22, 26,31 | |
| | * abstract; figure 1 * * column 3, paragraph 12 - paragraph 13 * * column 4, paragraph 20 - column 6, paragraph 30 * ----- | | |
| D,A | US 2004/064687 A1 (PFITZMANN BIRGIT M ET AL) 1 April 2004 (2004-04-01) * abstract; figure 1 * * paragraph [0016] - paragraph [0019] * ----- | 1,13,21, 26,31 | |

|  | TECHNICAL FIELDS SEARCHED (IPC) |
|---|---|
| | H04L G06F G07F |

~~The present search report has been drawn up for all claims~~

| Place of search | Date of completion of the search | Examiner |
|---|---|---|
| Berlin | 27 March 2006 | Figiel, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent

Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-31

**European Patent Office**

**LACK OF UNITY OF INVENTION
SHEET B**

Application Number

EP 05 40 5716

The Search Division considers that the present European patent application does not comply with the requirements of unity of invention and relates to several inventions or groups of inventions, namely:

1. claims: 1-31

   authenticating a user by verifying TAN, whereby TAN is generated using a private key of a key pair associated with the authentication module and using a secret token key associated with the authentication module

   ---

2. claim: 33

   changing a personal identification code by a user using a communication terminal to access a server via a telecommunications network

   ---

3. claims: 32, 34-37

   authenticating a user, whereby only a secret shared with the server is used.

   ---

4. claims: 38-39

   authenticating a user using additional challenge/response token device; no information is given about a shared secret or keys used.

   ---

5. claims: 40-42

   authenticating a user using a personal identification code; a public and private keys  associated with the server are used.

   ---

## ANNEX TO THE EUROPEAN SEARCH REPORT
## ON EUROPEAN PATENT APPLICATION NO.

EP 05 40 5716

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2006

| Patent document cited in search report | | Publication date | Patent family member(s) | | Publication date |
|---|---|---|---|---|---|
| US 2002107798 | A1 | 08-08-2002 | CN | 1386249 A | 18-12-2002 |
| | | | EP | 1234284 A1 | 28-08-2002 |
| | | | FR | 2810139 A1 | 14-12-2001 |
| | | | WO | 0195274 A1 | 13-12-2001 |
| | | | JP | 3773488 B2 | 10-05-2006 |
| | | | JP | 2003536304 T | 02-12-2003 |
| | | | TW | 513681 B | 11-12-2002 |
| EP 1396779 | A | 10-03-2004 | US | 2004034784 A1 | 19-02-2004 |
| US 2004064687 | A1 | 01-04-2004 | CN | 1480852 A | 10-03-2004 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5657390 A
- US 4405829 A
- US 4720860 A
- US 4885778 A
- US 4856062 A
- US 20040064687 A

**Non-patent literature cited in the description**

- **DIERKS, T. ; C. ALLEN.** The TLS Protocol Version 1.0. *Request for Comments 2246,* January 1999
- **LAMPORT, L.** Password Authentication with Insecure Communication. *Communications of the ACM,* 1981, vol. 24, 770-772